# EUROPEAN PATENT APPLICATION

(11) **EP 1 110 448 A1**
(43) Date of publication of application: **27.06.2001**
(21) Application number: 99926867.5
(22) Date of filing: 30.06.1999
(51) Int. Cl.: A01K 87/00, A01K 87/04

(54) **FISHLINE TWIST CORRECTING DEVICE AND FISHING ROD**

(71) Applicant: Fujimori, Akikatsu, Higashiosaka-shi, Osaka 579-8065 (JP)
(72) Inventor: Fujimori, Akikatsu, Higashiosaka-shi, Osaka 579-8065 (JP)
(74) Representative: Wolff, Michael, Dipl.-Phys.
(86) International application number: JP9903538
(87) International publication number: WO0100017

(57) **Abstract**

A fishline twist correcting device, wherein a spiral groove is formed in the outer peripheral surface of a correcting device main body in a direction reverse to the winding up direction of a reel.

## Description

### TECHNICAL FIELD

This invention relates to a fishline twist correcting device for correcting a fishline twist, and to a fishing rod to which the fishline twist correcting device is mounted.

### BACKGROUND TECHNIQUE

In recent years, a fishing rod having a reel is used at the time of fishing because it is more convenient. A rotating direction of such a reel is a constant direction and thus, a fishline is prone to have a curling habit or core set. If the fishline has the curling habit, twist is generated in the fishline, the twist is not easily and thus, there are various problems. For example, while an angler is untying a twisted portion of a fishline, the angler may loose the best catching time and may be disappointed. There is a problem that natural environment is destroyed, e.g., some angler may cut and remove the twisted portion and dispose of the cut portion which becomes scrap and contaminates a fishing spot, and the disposed fishline twines bird's or beast's foot and may kill the bird or beast.

Thereupon, in order to produce a fishline which is less prone to be twisted, there are proposed a fishing rod provided with a plurality of guide rings from a tip end of the rod and a reel, and a fishing rod so-called hollow rod through which a fishline passes. Further, a reel having a twist correcting device is developed.

However, the fishing rod and the reel are not provided means for correcting the curling habit of the fishline. Therefore, if the fishing rod and the reel are used several tens times, the fishline is twisted by the curling habit, and the fishline is twined, and the above problem can not be overcome. Further, a tool for correcting the twist of the fishline after home coming is prepared, but this tool is not portable and thus the twist can not be corrected at the fishing spot, and a tool capable of correcting the twist at the fishing spot is desired.

Thereupon, it is an object of the present invention to provide a twist correcting device and a fishing rod capable of immediately correcting the twist of the fishline at a fishing spot and capable of preventing a fishline from being disposed of due to the twist.

### DISCLOSURE OF THE INVENTION

In a fishline twist correcting device of the invention is disposed in a winding path of a fishline for correcting a twist of the fishline, and a helical groove directed in a direction opposite from a winding direction of a reel is formed along an outer peripheral surface of a correcting device main body, and when the fishline is wound up around the reel, the fishline is wound up while winding the fishline around the helical groove.

Further, a fishing rod of this invention has a fishline twist correcting device disposed in a winding path of a fishline.

### BRIEF DESCRIPTION OF THE DRAWINGS

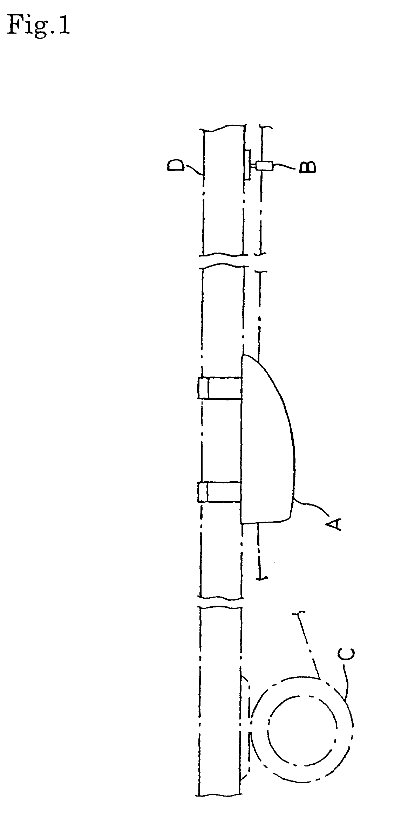

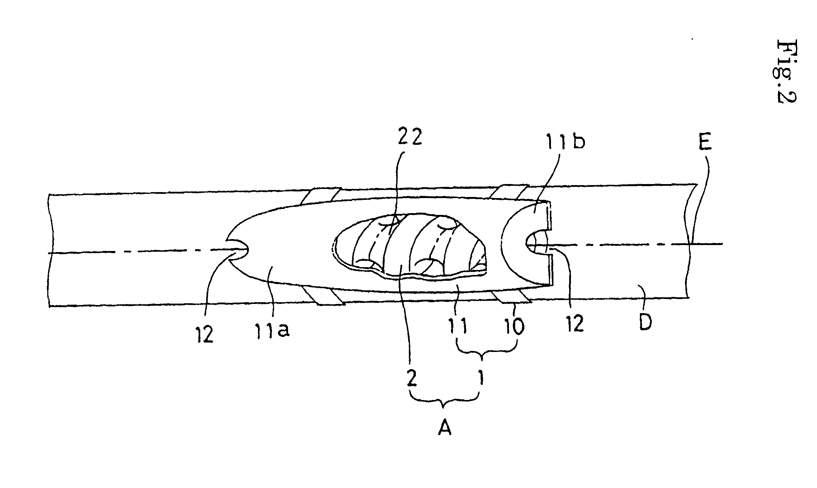

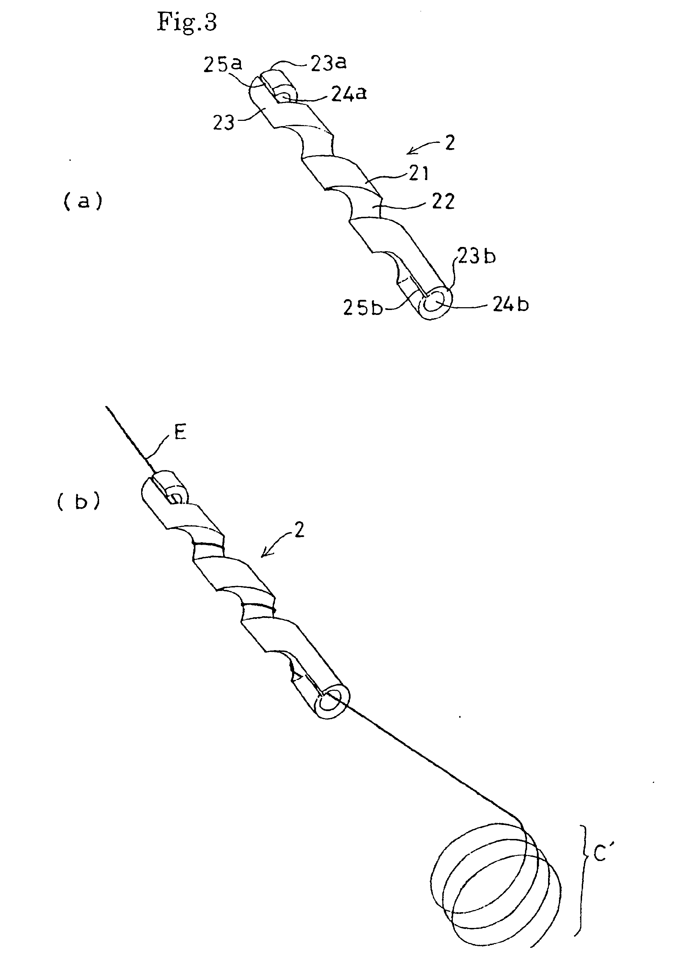

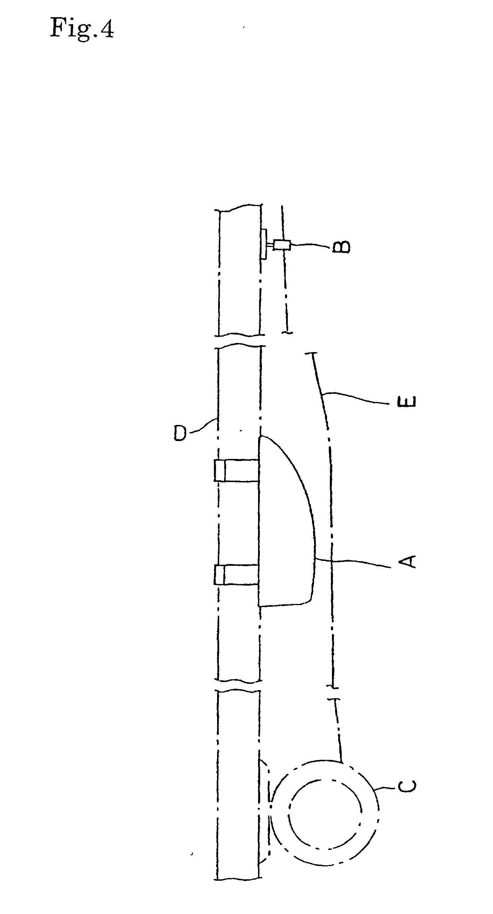

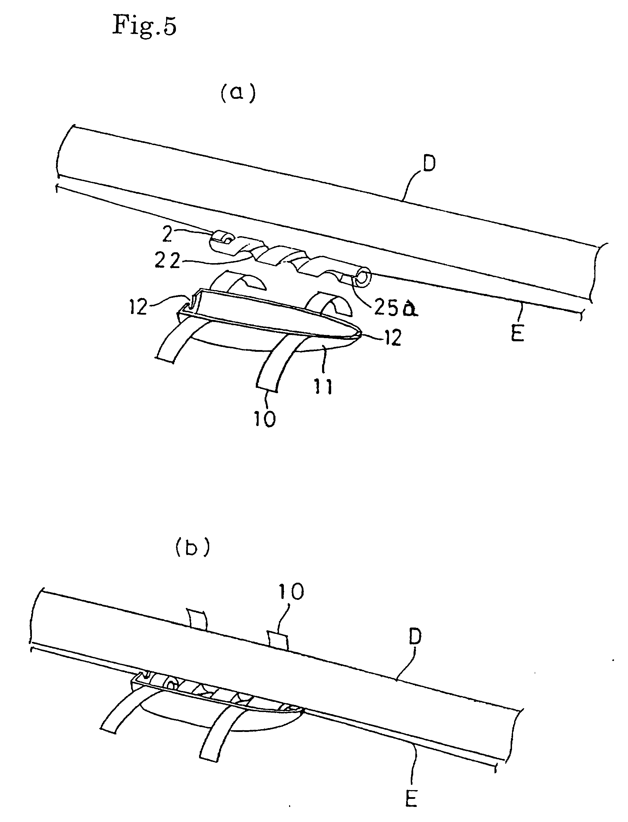

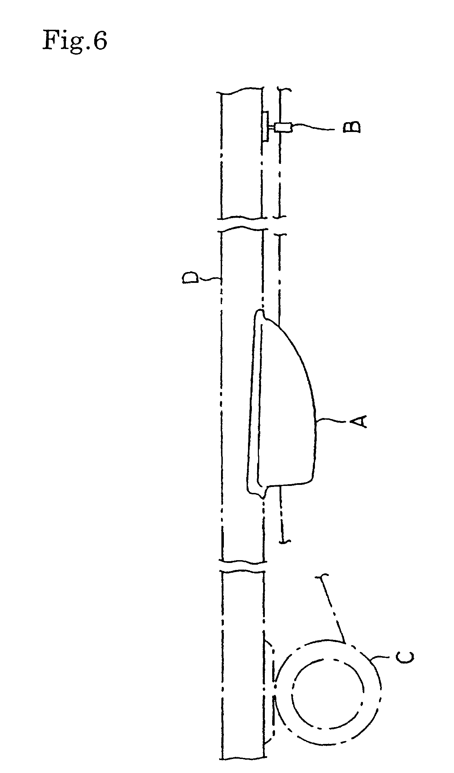

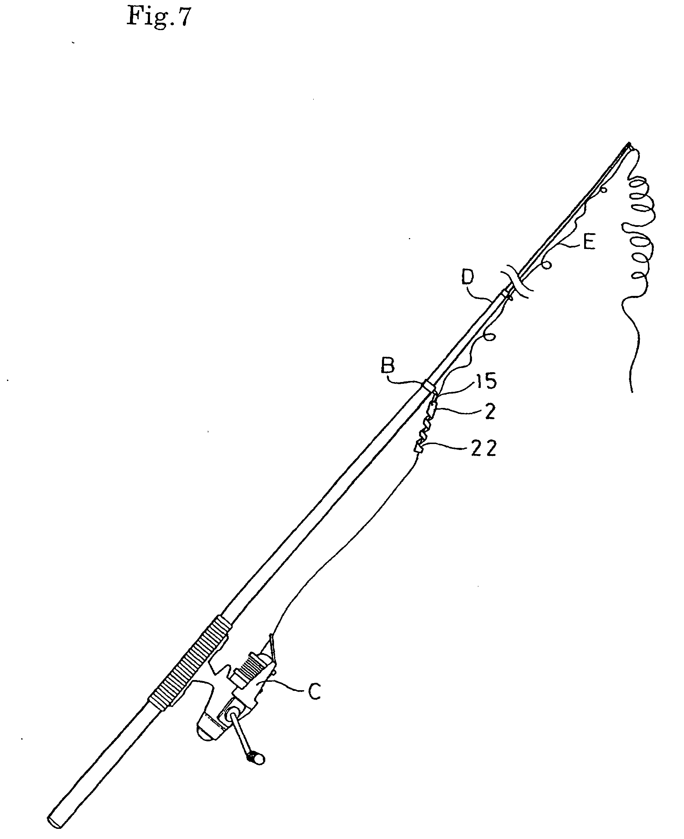

Fig. 1 is a view of an outer appearance showing a structure of a fishline twist correcting device. Fig. 2 is a view showing a structure of the fishline twist correcting device. Figs. 3 are schematic views showing a structure of a structure of a correcting device main body and a state in which a fishline was wound around the correcting device main body. Fig. 4 is an explanatory view of the fishline twist correcting device at the time of release. Figs. 5 are explanatory views showing a state of the fishline twist correcting device at the time of recovery. Figs. 6 and 7 are views of outer appearances showing structures of other embodiments.

### BEST MODE FOR CARRYING OUT THE INVENTION

A fishline twist correcting device and a fishing rod of this invention will be explained with reference to the drawings below.

Fig. 1 shows a structure of a fishline twist correcting device A of this invention. As shown in Fig. 1, the fishline twist correcting device A is mounted around an outer peripheral surface of a fishing rod D between a guide ring B and a reel C.

Fig. 2 is an enlarged view of the fishline twist correcting device A. As shown in Fig. 2, the fishline twist correcting device A is mounted to the fishing rod D by a mounting member 1 having a mounting belt 10 and an accommodating portion 11.

Surface fasteners (not shown) on front and back surfaces of the mounting belt 10. The mounting member 1 can be mounted to the fishing rod D by fastening the surface fasteners to each other. The accommodating portion 11 is formed with a fishline hole 12 in opposite ends surfaces 11a and 11b of the accommodating portion 11. A fishline E passes through the fishline hole 12, and a correcting device main body 2 is accommodated therein.

Figs. 3 show the structure of a correcting device main body 2. As shown in Figs. 3, the correcting device main body 2 is formed at its outer peripheral surface 21 with a helical groove 22. Here, the helical groove 22 is directed in a direction opposite from a winding direction when the fishline E of a chamber of a winding drum C of the reel as shown in Fig. 3(b) schematically. The correcting device main body 2 is provided at its opposite ends with thread guards 23. The thread guards 23 are provided at their end surfaces 23a and 23b with thread through holes 24a and 24b which are in communication with the helical groove 22. The thread guards 23 are formed at their outer peripheral surface with slits 25a and 25b which are in communication with the thread through holes 24a and 24b.

The fishline twist correcting device A having the above structure is used in the following manner when a fishhook is put into sea or river, i.e., when the fishline E is pulled out from the reel C (at the time of release), and when the fishline E is drawn, i.e., when the fishline E returns into the reel C (at the time of recovery).

That is, at the time of release as shown in Fig. 4, the fishline twist correcting device A does not participate in the operation, the fishhook (not shown) can be put into sea or river by swinging down the fishing rod D like a conventional rod.

At the time of recovery, the mounting belt 10 is untied, the accommodating portion 11 is detached from the fishing rod D and the correcting device main body 2 is removed. Next, as shown in Fig. 5(a), the fishline E is hooked in the slit 25a of the correcting device main body 2, the correcting device main body 2 is rotated by a finger, thereby winding the fishline E around the helical groove 22. Further, as shown in Fig. 5(b), the fishline E is allowed to pass through the fishline hole 12 formed in the accommodating portion 11 and then, the accommodating portion 11 is mounted to the fishing rod D using the mounting belt 10. Then, the fishline E is wound around the winding drum of the reel C like the conventional fishing rod.

Further, when the fishline E is released after recovery, the mounting belt 10 is untied from the fishing rod D and the accommodating portion 11 is detached, the correcting device main body 2 is removed and rotated in the opposite direction from that of the recovery operation, thereby releasing the fishline E from the correcting device main body 2, and the fishline E is released in the same manner as above.

As described above, according to the fishline twist correcting device A of this invention, when the fishline is wound, the fishline can be wound up while winding the fishline E around the helical groove 22 of the correcting device main body 2. Therefore, the twist of the fishline E can be corrected while winding up the fishline E. Further, since the correcting device main body 2 is detachably mounted to the fishing rod D by the mounting member 1, the correcting device main body 2 can be removed from the winding path of the fishline E at the time of release.

This invention is not limited to the above embodiment, and various modifications can be made within a range described in claims.

For example, although the accommodating portion 11 is of a dome shape in the above embodiment, this shape is not limited to that illustrated in the drawings only if the accommodating portion 11 has a fishline hole, and accommodating portion 11 may be of a fish-like shape or a popular character's shape. Although the mounting member 1 is mounted to the fishing rod D by the mounting belt 10 having the surface fasteners in the embodiment, a mounting belt having adhesive tape or hook may be used instead of the mounting belt 10. The correcting device main body 2 may be mounted directly to the fishing rod D using a belt having adhesive tape, surface fastener or hook without using the mounting member 1. Further, the mounting member 1 may be previously fixed to the fishing rod D as shown in Fig. 6 without detachably mounting the mounting member 1 to the fishing rod D.

Further, as shown in Fig. 7, when a hook member 15 is mounted to an end of the correcting device main body 2 to correct the twist of the fishline E, the hook member 15 may be hooked on the guide ring B of the fishing rod D, the fishline E may be wound up around the helical groove 22 and the fishline E may be wound up by the reel. By forming the mounting member into a hook-like shape, it is possible to handle the fishing rod more easily. When the hook member 15 is mounted, the entire correcting device main body 2 is formed into a key holder-like shape or necklace-like shape so that the fishline twist correcting device A itself can easily be portable.

Further, a cross section of the correcting device main body 2 is circle in the above embodiment, this shape is not limited, and the correcting device main body 2 may have a square or rectangular cross section. The number of pitches or grooves of the helical groove 22, and the mounting position of the correcting device main body 2 may be changed in accordance with a length of the fishing rod D, a length from the tip end of the rod to the reel, and the diameter of the fishline E. By changing the pitches or the like in accordance with the fishline E or the fishing rod D, the twist of the fishline can be corrected more efficiently.

### INDUSTRIAL APPLICABILITY

As apparent from the above explanation, according to the fishline twist correcting device and the fishing rod of this invention, since the fishline is wound around the helical groove of the correcting device main body disposed in the winding path of the fishline to correct the twist of the fishline while winding up the fishline, the twist of the fishline can immediately be corrected at a fishing spot, and the fishline can be accommodated in the winding drum of the reel.

## Claims

1. A fishline twist correcting device disposed in a winding path of a fishline for correcting a twist of the fishline, wherein a helical groove directed in a direction opposite from a winding direction of a reel is formed along an outer peripheral surface of a correcting device main body, and when the fishline is wound up around the reel, the fishline is wound up while winding the fishline around the helical groove.

2. The fishline twist correcting device according to claim 1, wherein the correcting device main body is provided at its opposite ends with thread guards, the thread guards are provided at their end surfaces with thread through holes which are in communication with the helical groove, and the thread guards are formed at their outer peripheral surfaces with slits which are in communication with the thread through holes.

3. The fishline twist correcting device according to claim 1 or 2, wherein the correcting device main body is detachably mounted to the fishing rod by a mounting member.

4. The fishing rod having a fishline twist correcting device described in claim 1 disposed in a winding path of a fishline.
